# EUROPEAN PATENT APPLICATION

(11) **EP 2 145 756 A1**
(43) Date of publication of application: **20.01.2010**
(21) Application number: 08012727.7
(22) Date of filing: 15.07.2008
(51) Int. Cl.: B32B 3/20

(54) **Functional laminate**

(71) Applicant: Amcor Flexibles Transpac N.V., 1935 Zaventem (BE)
(72) Inventor: Schlemmer, Paul, 8250 Egå (DK)
(74) Representative: Jensen, Peter Kim

(57) **Abstract**

A functional laminate (10) for packaging products, especially food products, comprising an inner film (12) having a first and a second surface and an outer film (11) having a first and a second surface, the second surface of the outer film (11) being laminated to the second surface of the inner film (12) by means of an adhesive layer (13) except for a limited region forming a compartment. The first surface of the inner film (12) and the first surface of the outer film (11) are substantially parallel throughout the entire extent of the laminate (10), and the compartment contains an active substance (14) and the inner film (12) comprises a passage means (15) providing a connection between the compartment and the first surface of the inner film (12).

## Description

### Technical Field

The present invention relates to a functional laminate for packaging products, especially food products, comprising an inner film having a first and a second surface and an outer film having a first and a second surface, the second surface of the outer film being laminated to the second surface of the inner film by means of an adhesive layer except for a limited region forming a compartment. The invention also relates to a method for manufacturing the functional laminate.

### Background Art

It is known to provide active packaging, however, the active substance is either incorporated across the entire laminate or in sachets and/or labels. By active packaging is meant any packaging system that performs an active function beyond the point at which the contents are packed, purposefully interacting with the contents to deliver improvements in terms of quality, sheff-life, safety and usability.

As an example, JP8205762A2 discloses an antimicrobial functional sheet for preserving fresh animal protein. The disclosed sheet comprises a functional layer prepared by impregnating a polyolefin nonwoven fabric with a dispersion of a silver-based antibacterial agent carrying silver on zirconium phosphate. This functional layer is laminated to a perforated polyethylene film, and finally a vinylidene chloride resin film is applied via an adhesive to the non-laminated side of the functional layer.

However, having the active substance distributed across the entire laminate is both expensive and a waste of active substance since the active substance is often not required across the entire laminate. Furthermore, the efficiency of the active substance is limited as compared to sachets and labels that are inserted into the inside of the packaging and thus allow to target desired region(s) in the packaging, since the active substance is bound in the laminate, thus lowering the reaction speed. Furthermore, when active components are incorporated into extruded plastic materials, the active components can decompose due to the temperature and/or pressure level present during a typical extrusion process, where the temperature is typically within the range 190-230°C and the pressure typically within the range 200-400 bar.

However, sachets and labels are expensive, since they require separate manufacturing and additional handling when the product is packed. Furthermore, they are experienced negatively by most consumers as foreign objects in the packaging.

### Disclosure of Invention

The object of the invention is to provide a new and improved functional laminate for active packaging.

The object of the invention is obtained by the first surface of the inner film and the first surface of the outer film being substantially parallel throughout the entire extent of the functional laminate, by the compartment containing an active substance and by the inner film comprising a passage means providing connection between the compartment and the first surface of the inner film. Hereby, the functional laminate is provided with a compartment in a limited region of the functional laminate, where the compartment comprises an active substance that can interact with a product packed in the functional laminate or the head space of the packaging. The compartment is integrated into the functional laminate in such a way so as to form part of the adhesive layer, and thus the compartment is not notable, as the compartment lies in plane with the functional laminate, a feature that has great importance in the consumer market. Furthermore, having the compartment only in a limited region of the functional laminate, the remaining functional laminate can be transparent or translucent. Additionally, by having the compartment in a limited region, an intelligent and targeted location of the compartment in relation to the packed product is made possible, thereby obtaining an efficient and intelligent use of the active substance in relation to the packed product without the active substance being in direct contact with the packed product. The active substance can be released in a continuous manner or at a desired point of time, so-called functional closure, and the functionality of the active substance can be adsorption, absorption and/or emission. Depending on the active substance placed in the compartment, the purpose could be either to increase or decrease oxygen, carbon dioxide, ethylene, moisture, humidity, smell, aroma, bacteria, anti-oxidants or conservation substances.

In an embodiment according to the invention the compartment is defined by the adhesive layer and the inner film. Hereby, the compartment is provided by a recess in the adhesive layer, thus the adhesive layer is preset throughout the entire functional laminate.

In another embodiment according to the invention the compartment is defined by the inner film, the outer film and the adhesive layer. In this case, the inner film and the outer film are not laminated to each other in the limited region of the compartment. This feature is important for manufacturing purposes, as it allows for cost-effective production of the functional laminate.

In another embodiment according to the invention the passage means is provided by at least one perforation extending through the inner film and being in connection with the compartment. Here, the passage between the compartment and the first surface of the inner film is provided by perforation(s) through the inner film. The perforation(s) can be made, e.g. by machines, by means of laser, cutting, punching, stamping, needles or electrostatic discharge. The smallest diameter of the perforation(s) is/are preferably smaller than the smallest diameter of the smallest particle of the active substance.

In another embodiment according to the invention the active substance is mixed with a binding material. In this embodiment the handling and the fixing of the active substance becomes easier, since the binding material can be chosen so as to provide properties, such as e.g. adhesion and/or high viscosity, which the active substance in itself does not possess. This feature also removes or minimises the risk for the active substance to scatter and/or fall into the packaging and thus get into direct contact with the packed product. Furthermore, by using a binding material the perforation(s) can have a larger diameter than compared to a functional laminate where the active substance is not mixed with a binding material, since the binding material constrains the particles of the active substance. An example of a binding material could be ethyl cellulose.

In another embodiment according to the invention the passage means is provided by the inner film being permeable for agents emitted by the active substance, gasses and/or vapours, emanated from the packed product. Hereby, the passage between the compartment and the first surface of the inner film is provided by the permeability of the inner film. The permeability of the inner film can be chosen so that it allows e.g. oxygen or other gasses or vapours to permeate the inner film. Furthermore, by using the permeability of the inner film as a passage means, there will be no notable mechanical perforations in connection with the compartment.

In another embodiment according to the invention the outer film is essentially impermeable to agents emitted by the active substance and oxygen. Hereby, it is ensured that the active substance does not react with the outside of the functional laminate. However, the impermeability of the outer film can also be chosen so that the outer film is impermeable to the active substance and/or gases such as oxygen while being permeable to other types of gas such as carbon dioxide.

In another embodiment according to the invention the active substance comprises an emitter emitting agents. Hereby, the functional laminate is provided with an active substance which can emit agents to the packaging so that the atmosphere can be controlled and optimized in relation to the packed product. Examples of emitters could be butylated hydroxytulene (BHT), antioxidants such as vitamin C and E, sorbate, imazalil, extracts from herbs and species such as clove, cinnamon and oregano, sulphur dioxide or carbon dioxide.

In another embodiment according to the invention the active substance comprises an absorber absorbing gases and/or vapours.

In another embodiment according to the invention the active substance comprises an adsorber adsorbing gasses and/or vapours. Hereby, the functional laminate is provided with an active substance that can absorb and/or adsorb gases and/or vapours from the packaging permitting the atmosphere inside the packaging to be controlled and optimized in relation to the packed product. Examples of absorbers for scavenging oxygen, also called oxygen scavengers, could be iron powder, sulphite, ascorbate, polyolefin based absorbers, polyamid-based absorbers (MXD₆), palladium catalysed reactions, enzyme catalysed reactions such as glucose oxidase and glucose, and an example of an absorber for scavenging ethylene, also called ethylene scavenger, could be pottasium permanganate. By an absorber and/or scavenger is meant a substance capable of removing e.g. oxygen from the headspace of a packaging by either a chemical or a physical absorption or adsorption. The chemical removal can occur e.g. by oxidation of the substance (e.g. by forming a chemical bond between at least one oxygen atom of the oxygen molecule and a molecule of the substance), while physical removal can be e.g. where oxygen molecules are entrapped within the substance.

In another embodiment according to the invention the active substance is an indicator comprising a substance changing colour when subjected to oxygen. Here, via the active substance the functional laminate is capable by use of indicator means to indicate the quality and/or safety of packaged food and transmit the information to the outside world by means of a colour shift. Examples of active substances for indicator use could be enzymes found in foodstuffs, H₂S-sensitive indicators based on a visually detectable colour change of agarose immobilised myoglobin, colour changing indicators sensitive to carbon dioxide, sulphur dioxide, ammonium, amines, pH and diacetyl, or synthetic oxygen sensitive inks including those inks based on ferrocene or pyrogallol components, thiazine dyes or other oxygen sensing dyes.

In another embodiment according to the invention the inner film is a multilayer film. Hereby, the inner film can be made up by a number of films with different properties, so that the inner film can be designed for certain purposes. By a multilayer film is meant a laminate, a coextruded film or the like. The inner film comprises different combinations of polyethylene, polypropylene, oriented polypropylene (OPP), polyethylene terephthalate (PETP), oriented polyamide (OPA), polyamide (PA), paper and/or cellophane.

In another embodiment according to the invention the outer film is a multilayer film. Hereby, the outer film can be made up by a number of films with different properties permitting the outer film to be designed for certain purposes. By a multilayer film is meant a laminate, a coextruded film or the like. The outer film comprises different combinations of polyethylene, polypropylene, oriented polypropylene (OPP), polyethylene terephthalate (PETP), oriented polyamide (OPA), polyamide (PA), polystyrene (PS), paper, cellophane, metallised film(s) and/or aluminium.

In another embodiment according to the invention the functional laminate is flexible. Hereby, the functional laminate can be used for all kinds of packaging due to the flexibility of the functional laminate. By a flexible functional laminate is meant a functional laminate having a thickness below at least 500 µm, 400 µm, 300 µm or even 200 µm.

The object of the invention is also achieved by a method for manufacturing a functional laminate comprising the following steps:
a) providing an outer film having a first and a second surface
b) providing an inner film having a first and a second surface
c) applying an adhesive layer to the second surface of the inner film or the outer film, however, excluding a limited region so as to define an adhesive free region
d) placing an active substance in the adhesive free region
e) joining the outer film and the inner film, so that the adhesive layer lies in between the second surface of the inner film and the second surface of the outer film and wherein the inner film comprises or is provided with a passage means providing connection between the active substance placed in the adhesive free region and the first surface of the inner film. Hereby, a method is provided whereby a functional laminate is obtainable. The passage means could be permeability of the inner film and/or perforations of the inner film. The perforations can be provided before joining the outer film and the inner film in step e) or after step e). The active substance could also be applied before the adhesive layer.

The fundamental action involved in lamination of flexible materials is bringing together and bonding two or more webs by means of some adhesive agent to create a single web. The adhesive layer could be water-based, solvent-based, 2-component non-solvent adhesives, hotmelt, heat lamination or extrusion coating of thermoplastic materials such as polyethylene.

### Brief Description of the Drawing

The invention is explained in detail below with reference to a number of embodiments shown in the drawings, in which
Fig. 1 shows a cutout cross sectional view of a first embodiment of the functional laminate according to the invention,
Fig. 2 shows a cutout cross sectional view of a second embodiment of the functional laminate according to the invention,
Fig. 3 shows a cutout cross sectional view of a third embodiment of the functional laminate according to the invention,
Fig. 4 shows a cutout cross sectional view of a fourth embodiment of the functional laminate according to the invention,
Fig. 5 shows a cutout cross sectional view of a fifth embodiment of the functional laminate according to the invention, and
Fig. 6 shows a cutout cross sectional view of a sixth embodiment of the functional laminate according to the invention.

### Best Modes for carrying out the Invention

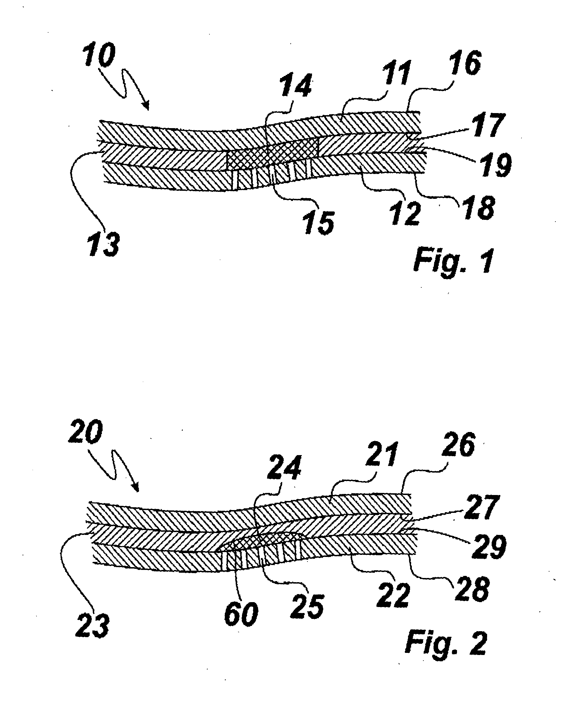

Fig. 1 shows a first embodiment of a functional laminate 10 according to the invention. According to this embodiment, the functional laminate 10 comprises an outer film 11 having a first surface 16 and a second surface 17 and an inner film 12 having a first surface 18 and a second surface 19. The inner and outer film are joined together by an adhesive layer 13 arranged in between the second surface 17 of the outer film 11 and the second surface 19 of the inner film 12. However, the adhesive layer 13 is omitted, in a limited region, so as to form a compartment wherein an active substance is placed. The active substance 14 can interact (by emitting agents or by adsorbing or absorbing gases and/or vapours) with a product packed in the functional laminate 10 via perforations 15 extending from the compartment through the inner film 12. The first surface 18 of the inner film 12 and the first surface 16 of the outer film 11 are substantially parallel throughout the entire extent of the functional laminate 10.

Fig. 2 shows a second embodiment of a functional laminate 20 according to the invention. According to this embodiment, the functional laminate 20 comprises an outer film 21 having a first surface 26 and a second surface 27 and an inner film 22 having a first surface 28 and a second surface 29. The inner and outer films are joined together by an adhesive layer 23 in between the second surface 27 of the outer film 21 and the second surface 29 of the inner film 22. However, the adhesive layer 23 forms, in a limited region, a compartment by a recess 60 in the adhesive layer 23 adjacent to the second surface 29 of the inner film 22. An active substance 24 is placed in the compartment. The active substance 24 can interact (by emitting agents or by adsorbing or absorbing gases and/or vapours) with a product packed in the functional laminate 20 via perforations 25 extending from the compartment through the inner film 22. The first surface 28 of the inner film 22 and the first surface 26 of the outer film 21 are substantially parallel throughout the entire extent of the functional laminate 20.

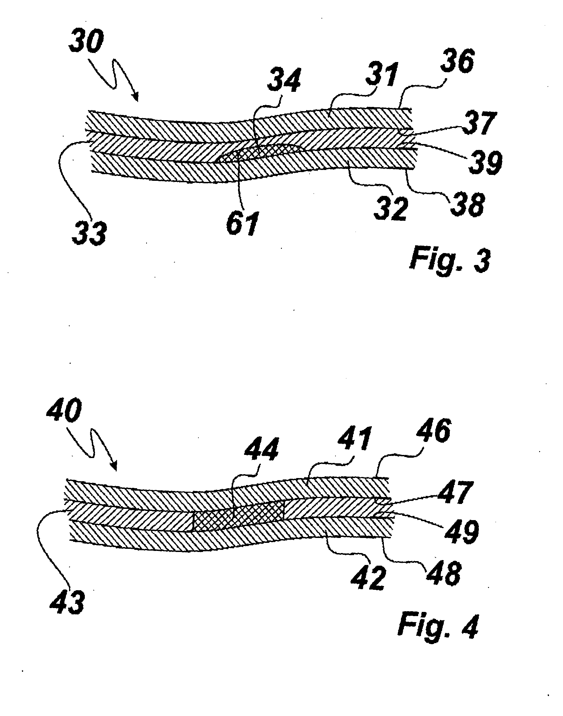

Fig. 3 shows a third embodiment of a functional laminate 30 according to the invention. According to this embodiment, the functional laminate 30 comprises an outer film 31 having a first surface 36 and a second surface 37 and an inner film 32 having a first surface 38 and a second surface 39. The inner and outer films are joined together by an adhesive layer 33 in between the second surface 37 of the outer film 31 and the second surface 39 of the inner film 32. However, the adhesive layer 33 is omitted in a limited region so as to form a compartment by a recess 61 in the adhesive layer 33 adjacent to the second surface 39 of the inner film 32. An active substance 34 is placed in the compartment. The active substance 34 can interact (by emitting agents or by adsorbing or absorbing gases and/or vapours) with a product packed in the functional laminate 30 by the inner film 32 being permeable to agents emitted by the active substance and/or gases and/or vapours emanated from the packed product. The first surface 38 of the inner film 32 and the first surface 36 of the outer film 31 are substantially parallel throughout the entire extent of the functional laminate 30.

Fig. 4 shows a fourth embodiment of a functional laminate 40 according to the invention. According to this embodiment, the functional laminate 40 comprises an outer film 41 having a first surface 46 and a second surface 47 and an inner film 42 having a first surface 48 and a second surface 49. The inner and outer films are joined together by an adhesive layer 43 in between the second surface 47 of the outer film 41 and the second surface 49 of the inner film 42. However, the adhesive layer 43 is omitted in a limited region so as to form a compartment in the adhesive layer 43 wherein an active substance is placed. The active substance 44 can interact (by emitting agents or by adsorbing or absorbing gases and/or vapours) with a product packed in the functional laminate 40 by the inner film 42 being permeable to agents emitted by the active substance and/or gases and/or vapours emanated from the packed product. The first surface 48 of the inner film 42 and the first surface 46 of the outer film 41 are substantially parallel throughout the entire extent of the functional laminate 40.

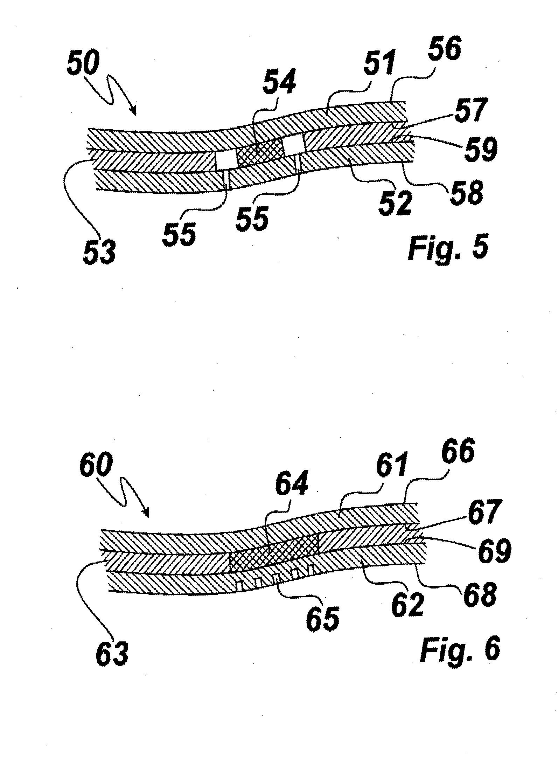

Fig. 5 shows a fifth embodiment of a functional laminate 50 according to the invention. According to this embodiment, the functional laminate 50 comprises an outer film 51 having a first surface 56 and a second surface 57 and an inner film 52 having a first surface 58 and a second surface 59. The inner and outer films are joined together by an adhesive layer 53 in between the second surface 57 of the outer film 51 and the second surface 59 of the inner film 52. However, the adhesive layer 53 is omitted in a limited region so as to form a compartment wherein an active substance is placed. The active substance 54 has a smaller lateral extent so as to provide at least one region without the active substance 54. The active substance 54 can interact (by emitting agents or by adsorbing or absorbing gases and/or vapours) with a product packed in the functional laminate 50 via perforations 55 extending through the inner film 52 from a region of the compartment without the active substance. Thereby, the interaction of the active substance with the packed product is more indirect. The first surface 58 of the inner film 52 and the first surface 56 of the outer film 51 are substantially parallel throughout the entire extent of the functional laminate 50.

Fig. 6 shows a sixth embodiment of a functional laminate 60 according to the invention. According to this embodiment, the functional laminate 60 comprises an outer film 61 having a first surface 66 and a second surface 67 and an inner film 62 having a first surface 68 and a second surface 69. The inner and outer films are joined together by an adhesive layer 63 arranged in between the second surface 67 of the outer film 61 and the second surface 69 of the inner film 62. However, the adhesive layer 63 is omitted in a limited region so as to form a compartment wherein an active substance is placed. The active substance 64 can interact (by emitting agents or by adsorbing or absorbing gases and/or vapours) with a product packed in the functional laminate 60 by a combination of the inner film 62 being permeable to agents emitted by the active substance and/or gases and/or vapours emanated from the packed product and through perforations 65 extending partly through the inner film 62. The first surface 68 of the inner film 62 and the first surface 66 of the outer film 61 are substantially parallel throughout the entire extent of the functional laminate 60.

In a preferred embodiment according to the invention, the inner film 12, 22, 32, 42, 52 comprises polyethylene and the outer film comprises oriented-polyamide (OPA), while the active substance comprises an iron powder for oxygen scavenging, which during oxidation forms Fe(II) and Fe(III)-oxides. The oxidation is activated by the presence of humidity from the packed product. The iron powder may either be placed directly in the compartment or placed mixed with a binding material, such as ethyl cellulose, in the compartment.

In another preferred embodiment according to the invention, the active substance comprises an agent emitting carbon dioxide, sodium bicarbonate, fumaric acid, calcium chloride or fumed silica.

In another preferred embodiment according to the invention, the active substance comprises an oxygen sensitive ink, a ferrocine compound (changing colour from yellow to green) or pyrogallol (changing from being transparent to brown colour).

The invention has been described with reference to a preferred embodiment. However, the scope of the invention is not limited to the illustrated embodiment, and alterations and modifications can be carried out without deviating from the scope of the invention.

## Claims

1. A functional laminate (10, 20, 30, 40, 50) for packaging products, especially food products, comprising an inner film (12, 22, 32, 42, 52) having a first and a second surface and an outer film (11, 21, 31, 41, 51) having a first and a second surface, the second surface of the outer film being laminated to the second surface of the inner film by means of an adhesive layer (13, 23, 33, 43, 53) except for a limited region forming a compartment, **characterised in that** the first surface of the inner film and the first surface of the outer film are substantially parallel throughout the entire extent of the functional laminate (10, 20, 30, 40, 50), that the compartment contains an active substance (14, 24, 34, 44, 54) and that the inner film comprises a passage means (15, 25, 55) providing a connection between the compartment and the first surface of the inner film.

2. A functional laminate according to claim 1, wherein the compartment is defined by the adhesive layer (23, 33) and the inner film (22, 32).

3. A functional laminate according to claim 1, wherein the compartment is defined by the inner film (12, 42, 52), the outer film (11, 41, 51) and the adhesive layer (13, 43, 53).

4. A functional laminate according to claims 1, 2 or 3, wherein the passage means (15, 25, 55) is provided by at least one perforation (15, 25, 55) through the inner film (12, 22, 52) and in connection with the compartment.

5. A functional laminate according to claims 1, 2, 3 or 4, wherein the active substance (14, 24, 34, 44, 54) is mixed with a binding material.

6. A functional laminate according to any of the preceding claims, wherein the passage means is provided by the inner film (32, 42) being permeable to agents emitted by the active substance or gases and/or vapours emanated from the packed product.

7. A functional laminate according to any of the preceding claims, wherein the outer film (11, 21, 31, 41, 51) is essentially impermeable to agents emitted by the active substance and oxygen.

8. A functional laminate according to any of the preceding claims, wherein the active substance (14, 24, 34, 44, 54) comprises an emitter emitting agents.

9. A functional laminate according to any of the preceding claims, wherein the active substance (14, 24, 34, 44, 54) comprises an absorber absorbing gases and/or vapours.

10. A functional laminate according to any of the preceding claims, wherein the active substance (14, 24, 34, 44, 54) comprises an adsorber adsorbing gases and/or vapours.

11. A functional laminate according to any of the preceding claims, wherein the active substance (14, 24, 34, 44, 54) is an indicator comprising a substance changing colour when subjected to oxygen.

12. A functional laminate according to any of the preceding claims, wherein the inner film (12, 22, 32, 42, 52) is a multilayer film.

13. A functional laminate according to any of the preceding claims, wherein the outer film (11, 21, 31, 41, 51) is a multilayer film.

14. A functional laminate according to any of the preceding claims, wherein the functional laminate (10, 20, 30, 40, 50) is flexible.

15. A method for manufacturing a functional laminate (10, 40, 50) comprising the following steps:
a) providing an outer film (11, 41, 51) having a first and a second surface
b) providing an inner film (12, 42, 52) having a first and a second surface
c) applying an adhesive layer (13, 43, 53) to the second surface of the inner film or the outer film, however, excluding a limited region so as to define an adhesive free region
d) placing an active substance (14, 44, 54) in the adhesive free region
e) joining the outer film (11, 41, 51) and the inner film (12, 42, 52) so that the adhesive layer (13, 43, 53) lies in between the second surface of the inner film and the second surface of the outer film and wherein the inner film (12, 42, 52) comprises or is provided with a passage means (15, 25, 55) providing a connection between the active substance (14, 44, 54) placed in the adhesive free region and the first surface of the inner film.
